# EUROPÄISCHE PATENTANMELDUNG

(11) **EP 1 775 431 A1**
(43) Veröffentlichungstag der Anmeldung: **18.04.2007**
(21) Anmeldenummer: 05022278.5
(22) Anmeldetag: 12.10.2005
(51) Int. Cl.: F01K 7/18, F01K 7/20, F01K 7/22, F01K 7/24, F01K 13/02, F01D 25/10

(54) **Verfahren zum Aufwärmen einer Dampfturbine**

(71) Anmelder: SIEMENS AKTIENGESELLSCHAFT, 80333 München (DE)
(72) Erfinder: Diesterbeck, Henri, Orlando, FL 32828 (US); Gobrecht, Edwin, 40885 Ratingen (DE); Peters, Karsten, 45485 Wesel (DE); Quinkertz, Rainer, Dr., 45130 Essen (DE)

(57) **Zusammenfassung**

Die Erfindung betrifft ein Verfahren zum Aufwärmen einer Dampfturbine (1), wobei die Dampfturbine (1) eine Hochdruck-Teilturbine (2) und eine Mitteldruck- (3) und/oder Niederdruck-Teilturbine (4) umfasst. Das Verfahren ist durch den wesentlichen Aspekt gekennzeichnet, dass die Hochdruck-Teilturbine (2) nach einem Kaltstart mit einem Dampf mit vergleichsweise hoher Leitfähigkeit beaufschlagt wird, und die Mitteldruck- (3) bzw. Niederdruck-Teilturbine (4) während dieser Beaufschlagung geschlossen bleiben. Sobald die Leitfähigkeit einen bestimmten Wert unterschreitet, wird auch die Mitteldruck- (3) bzw. die Niederdruck-Teilturbine (4) mit Dampf beaufschlagt.

## Beschreibung

Die Erfindung betrifft ein Verfahren zum Aufwärmen einer Dampfturbine, wobei die Dampfturbine eine Hochdruck-Teilturbine und eine Mitteldruck- und/oder eine Niederdruck-Teilturbine umfasst, wobei die Hochdruck-Teilturbine eingangsseitig über eine Frischdampfleitung an einem Dampferzeuger strömungstechnisch angekoppelt wird, wobei zwischen der Hochdruck-Teilturbine und der Mitteldruck-Teilturbine ein Dampf-Ventil angeordnet wird, wobei die Hochdruck-Teilturbine, die Frischdampfleitung und der Dampferzeuger parallel aufgewärmt werden.

Bei Kraftwerken, die zur Stromerzeugung mit einer Dampfturbinenanlage ausgestattet sind, kann es in Abhängigkeit des aktuellen Strombedarfs erforderlich sein, eine einzelne Dampfturbine oder mehrere Dampfturbinen abzuschalten und bedarfsabhängig wieder zuzuschalten. Ein schnelles Starten der jeweiligen Dampfturbinenanlage ist hierbei von entscheidender Bedeutung. Dies gilt insbesondere für längere Stillstandszeiten, insbesondere nach einem Kaltstart und nach einem Warmstart, z.B. nach einem Wochenendstillstand. Gemäß dem Stand der Technik wird während des Startvorgangs zunächst ein Dampferzeuger hochgefahren bzw. erwärmt, um die Dampftemperatur und den Dampfdruck zu erhöhen. Sobald für den Dampf eine vorbestimmte Starttemperatur und ein vorbestimmter Startdruck sowie eine vorbestimmte Startqualität stabil vorliegen, wird ein Anfahrverfahren zum Anfahren der Dampfturbine gestartet. Hierzu werden u. a. Frischdampfventile mehr oder weniger stark geöffnet. Dabei sind die Werte für die Starttemperatur, den Startdruck und die Startqualität des Dampfes so gewählt, dass nach dem Anfahren der Dampfturbine ein Leerlaufbetrieb oder ein Lastbetrieb mit geringer Last für die Dampfturbine realisierbar ist. Der Dampf weist hierbei eine Leitfähigkeit auf, dessen Werte innerhalb eines vorgegebenen Bereiches liegen müssen, um Schäden durch verunreinigten Dampf an der Dampfturbine zu vermeiden.

Beim Anfahren einer Dampfturbinenanlage wird deswegen die Leitfähigkeit des Dampfes fortwährend ermittelt und erst wenn der Dampf einen gewissen Grenzwert unterschritten hat, lässt man ihn in die Dampfturbine einströmen.

Die Werte für die Starttemperatur, den Startdruck und die Startqualität des Dampfes sind so gewählt, dass nach dem Anfahren der Dampfturbine ein Leerlaufbetrieb oder ein Lastbetrieb mit geringer Last für die Dampfturbine realisierbar ist. Bis zum Start des eigentlichen Anfahrverfahrens müssen diese Parameter stabil vorliegen. Je nach Kraftwerkstyp und Kesselbauart oder Kraftwerksgröße können hierbei regelmäßig etwa 1 bis 3 Stunden vergehen. Beim Anfahren aus einem kalten Maschinenzustand werden durch die Beaufschlagung mit heißem Dampf regelmäßig hohe Materialbelastungen durch die auftretenden Wärmedehnungsspannungen erreicht. Typischerweise erfolgt heute eine messtechnische Überwachung der Wärmedehnungsspannungen. Es besteht dabei ein erhöhtes Interesse, die Startzeiten für eine solche Dampfturbinenanlage zu verkürzen, um dadurch die Wirtschaftlichkeit der Dampfturbinenanlage bzw. eines damit ausgestatteten Kraftwerks zu erfüllen.

Das Anfahrverfahren wird üblicherweise nur dann gestartet, wenn für den Dampf eine vorbestimmte Startqualität, insbesondere hinsichtlich Reinheit und pH-Wert vorliegt. Vorzugsweise wird auch das Vorwärmverfahren nur dann gestartet, wenn der Dampf eine vorbestimmte Vorwärmqualität aufweist, wobei die Startqualität höher ist als die Vorwärmqualität. Der Aufwand zur Erzielung einer hohen Dampfqualität ist relativ hoch.

Unter einer Dampfturbine im Sinne der vorliegenden Anmeldung wird eine Dampfturbine verstanden, die mehrere Teilturbinen umfassen kann. Die Teilturbinen können hierbei für verschiedene Dampfparameter wie z. B. Temperatur und Druck ausgelegt sein. Bekannt sind hierbei Hochdruck-, Mitteldruck- und Niederdruck-Teilturbinen. In die Hochdruck-Teilturbine strömt in der Regel überhitzter Dampf, der eine Temperatur bis zu 620°C aufweisen kann. Darüber hinaus kann dieser überhitzte Dampf einen Druck bis zu 300 bar aufweisen. Der überhitzte Dampf wird auch als Heißdampf bezeichnet. Wird Sattdampf von einem Bodenkörper oder Kondensat getrennt und bei gleich bleibendem Druck erhitzt, so wird der Dampf zunehmend ungesättigter. Dieser Dampf wird als Heißdampf oder überhitzter Dampf bezeichnet.

Der Dampfraum über einem Bodenkörper oder Kondensat hat für eine vorliegende Gleichgewichtstemperatur die größtmögliche Menge an Molekülen aufgenommen: Dieser Dampf wird als Sattdampf, Trockendampf oder gesättigter Dampf bezeichnet.

Eine Mitteldruck-Teilturbine hingegen ist derart ausgebildet, dass der entspannte Dampf aus einer Hochdruck-Teilturbine in einen Zwischenüberhitzer gelangt, wobei in dem Zwischenüberhitzer die Temperatur des Dampfes erhöht wird, und anschließend in die Mitteldruck-Teilturbine strömt. Die Temperatur des Dampfes, der in die Mitteldruck-Teilturbine liegt hierbei bei ca. 600°C und weist eine Temperatur von ca. 80 bar auf. Der aus der Mitteldruckteilturbine ausströmende Dampf wird schließlich zu einer Niederdruck-Teilturbine geführt.

Die Unterteilung in Hochdruck-, Mitteldruck- und Niederdruck-Teilturbinen wird in der Fachwelt nicht einheitlich verwendet. So können die Dampfparameter wie z. B. Temperatur und Druck nicht als einziges Unterscheidungskriterium zwischen einer Hochdruck-, Mitteldruck- und Niederdruck-Teilturbinen verwendet werden.

Verfahren zum Betrieb von Dampfturbinen mit einer Zwischenüberhitzung des aus der Hochdruck-Teilturbine ausströmenden und in eine Mitteldruck-Teilturbine einströmenden Dampfes sind bekannt. Durch die Zwischenüberhitzung wird die Temperatur des Dampfes, der schon im Hochdruckteil einer Dampfturbine Arbeit geleistet hat, wieder erhöht und somit das verfügbare Gefälle vergrößert, ehe der Dampf in den Niederdruckteil der Turbine gelangt. Dadurch wird der Wirkungsgrad der Anlage erhöht.

Ein weiterer Vorteil des Betriebes von Dampf- oder Kombikraftwerken mit Zwischenüberhitzung des Dampfes besteht darin, dass durch die Zwischenüberhitzung die Endnässe des Dampfes in den Endstufen der Turbine vermindert und dadurch die strömungstechnische Güte und die Lebensdauer verbessert wird.

Zwischenüberhitzung wird bei Dampfturbinen dann angewendet, wenn der Dampf bei der Expansion in der Maschine zu nass wird. Der Dampf wird dann nach Durchströmen einer Anzahl von Stufen aus der Turbine heraus zum Zwischenüberhitzer geleitet und danach erneut der Turbine zugeführt. Bei sehr hohen Druckgefällen wird eine mehrfache Zwischenüberhitzung angewendet, um in der Letztstufe keine zu große Dampfnässe zu erhalten.

Der Erfindung liegt die Aufgabe zugrunde, das Aufwärmen einer abgekühlten Dampfturbine zu beschleunigen.

Die Aufgabe wird gelöst durch ein Verfahren zum Aufwärmen einer Dampfturbine, wobei die Dampfturbine eine Hochdruck-Teilturbine und eine Mitteldruck-Teilturbine und/oder Niederdruck-Teilturbine umfasst, wobei die Hochdruck-Teilturbine eingangsseitig über eine Frischdampfleitung an einem Dampferzeuger strömungstechnisch angekoppelt wird, wobei zwischen der Hochdruck-Teilturbine und der Mitteldruck-Teilturbine ein Dampf-Ventil angeordnet wird, wobei die Hochdruck-Teilturbine, die Frischdampfleitung und der Dampferzeuger zeitgleich aufgewärmt werden, wobei das Verfahren folgende Schritte umfasst:
a) Erhöhung eines ausgangsseitigen Gegendrucks der Hochdruck-Teilturbine,
b) Öffnen eines vor dem Eingang der Hochdruck-Teilturbine angeordneten Ventils, sobald die Leitfähigkeit des im Dampferzeuger erzeugten Dampfes einen Toleranzwert unterschreitet,
c) Schließen des zwischen der Hochdruck- und Mitteldruck-Teilturbine angeordneten Dampf-Ventils,
d) Regeln der Umdrehungszahl des Rotors der Hochdruck-Teilturbine auf einen Wert unter der Nenndrehzahl,
e) Absenken des Gegendrucks, sobald die Leitfähigkeit des im Dampferzeuger erzeugten Dampfes einen Grenzwert unterschreitet,
f) Aufwärmen der Mitteldruck- und/oder Niederdruck-Teilturbine mit dem vom Dampferzeuger erzeugten Dampf, dessen Leitfähigkeit unter dem Grenzwert liegt, durch Öffnen des Dampf-Ventils.

Die Erfindung geht u. a. von dem Aspekt aus, dass es nicht notwendig erscheint, die Hochdruck-, Mitteldruck- und Niederdruckdampf-Teilturbine umfassende Dampfturbine gleichzeitig mit einem Dampf mit hinreichend guter Qualität zu beströmen. So ist es ein Aspekt dieser Erfindung, dass die Hochdruck-Teilturbine mit einem Dampf mit nicht hinreichend guter Qualität, wie zum Beispiel der Leitfähigkeit, beaufschlagt werden kann, wenn die erfindungsgemäßen Verfahrensschritte berücksichtigt werden. Nach einem Kaltstart beginnt das Aufwärmen der Dampfturbine mit einem entsprechenden Druckaufbau in der Frischdampfleitung. Die Frischdampfleitung wird meist gleichzeitig mit dem Dampferzeuger vorgewärmt. Der Dampferzeuger wird auch als Kessel bezeichnet. Das erstmalige Öffnen der Dampfventile ist abhängig von der Leitfähigkeit des Dampfes, der Überhitzung und den Absoluttemperaturen des Dampfes. Der Dampf muss hierbei eine gewisse Qualität aufweisen. Ein Dampf mit unzureichender Qualität kann durch aggressive Verunreinigungen zu einer erhöhten Korrosionsbeanspruchung führen, die sich z.B. im Bereich einer beginnenden Dampfnässe ungünstig auf eine Biegewechselfestigkeit der Schaufelwerkstoffe auswirkt. Allerdings ist das Problem der ungenügenden Dampfqualität auf die Niederdruck-Teilturbine gerichtet, da hier besonders hohe Auslastungen der Endstufen erfolgen. Die Hochdruck-Teilturbine kann im Vergleich zur Niederdruck-Teilturbine mit einem Dampf beaufschlagt werden, der eine schlechtere Leitfähigkeit aufweist als ein Dampf, mit dem die Niederdruck-Teilturbine beaufschlagt wird.

Das Anwärmen der gesamten Dampfturbine beginnt, gemessen am Stand der Technik, erst bei einer ausreichenden Leitfähigkeit des Dampfes. Wohingegen erfindungsgemäß vorgeschlagen wird, die Hochdruck-Teilturbine zusammen mit den Frischdampfleitungen und dem Dampferzeuger bei einer geschlossenen Mitteldruck- und/oder Niederdruckturbine vorzuwärmen.

Da für Hochdruck-Teilturbinen vergleichsweise niedrige Anforderungen an die Leitfähigkeit des Dampfes gestellt werden, kann bereits bei hohen Leitfähigkeiten mit der Beströmung begonnen werden. Dafür wird das vor der Mitteldruck-Teilturbine angeordnete Dampfventil geschlossen. Damit kann ein Gegendruck am Ausgang der Hochdruck-Teilturbine erzeugt werden, der im Rahmen von zulässigen Werten nahezu beliebig angehoben werden kann. Dadurch erfolgt eine Aufwärmung mit hoher Kondensationswärme.

Ein wesentlicher Aspekt der Erfindung ist zum einen, dass Dampf mit vergleichsweise hoher elektrischer Leitfähigkeit zum Vorwärmen der Hochdruck-Teilturbine zugelassen wird und zum anderen, dass der Gegendruck am Ausgang der Hochdruck-Teilturbine zu Beginn einer Vorwärmphase erhöht wird und vor einem anschließenden Hochfahren auf Nenndrehzahlen wieder abgesenkt wird. Dieser Dampf strömt zunächst durch die Hochdruck-Teilturbine. Der Druck des Dampfes am Ausgang der Hochdruck-Teilturbine wird erhöht. Dies wird beispielsweise mit einer zwischen der Hochdruck- und Mitteldruck-Teilturbine angeordneten Klappe oder einem Ventil, die bzw. das teilweise oder ganz geschlossen werden kann, erreicht. Durch die Erhöhung des Drucks wird der Wärmeübergang des Dampfes auf die dickwandigen Bauteile der Hochdruck-Teilturbine verbessert. Der durchströmende Dampf wird sozusagen am Ausgang gestaut, wodurch ein schnelles Erwärmen der Hochdruck-Teilturbine erfolgt. Dadurch wird die Sättigungstemperatur des Dampfes auf höhere Werte verschoben.
Die Schritte a) und c) können deswegen vertauscht werden.

Bei einer Sättigung (Kondensation) können Wärmeübergangszahlen von ca. 5000 W/(m²K) erreicht werden, wobei bei überhitzten Zuständen (Konvektion) lediglich Wärmeübergangszahlen von ca. 150 W/(m²K) erreicht werden. Dadurch kann der Wärmeeintrag in die Bauteile der Hochdruck-Teilturbine während der Vorwärmphase gesteigert werden.

Mit dem erfindungsgemäßen Verfahren kann eine Vorwärmung der Dampfturbine ca. 1 bis 3 Stunden früher begonnen werden. Ein weiterer Vorteil ist, dass der Wärmeeintrag durch die größere Sattdampftemperatur zu einer beschleunigten Aufwärmung der Bauteile der Hochdruck-Teilturbine führt. Dadurch können die Blockanfahrtszeiten bei einem Kaltstart um ca. 1 bis 1,5 Stunden verkürzt werden.

In einer vorteilhaften Weiterbildung liegt der Toleranzwert für die elektrische Leitfähigkeit des Dampfes zwischen 0,5 und 5 µSiemens/cm.

Erfahrungswerte haben gezeigt, dass dieser Wertebereich für den Toleranzwert besonders geeignet ist.

In einer weiteren vorteilhaften Weiterbildung wird im Schritt d) die Umdrehungszahl des Rotors auf Werte zwischen 100 bis 1000 U/min geregelt. Dadurch wird eine Ventilation vermieden und die Möglichkeit geschaffen, bereits bei niedrigen Dampfmassenströmen vorzuwärmen. Die Umdrehungszahlen liegen hierbei unterhalb eines Sperrbereiches.

Ausführungsbeispiele der Erfindung werden nachfolgend unter Bezugnahme auf die Zeichnungen näher beschrieben. Dabei haben mit demselben Bezugszeichen versehene Komponenten die gleiche Funktionsweise.

Dabei zeigen:
- FIG 1: eine schematische Darstellung einer Dampfturbine umfassend eine Hochdruck-, Mitteldruck- und Niederdruck-Teilturbine,
- FIG 2: eine schematische Darstellung einer alternativen Dampfturbine umfassend eine Hochdruck-, Mitteldruck- und Niederdruck-Teilturbine.

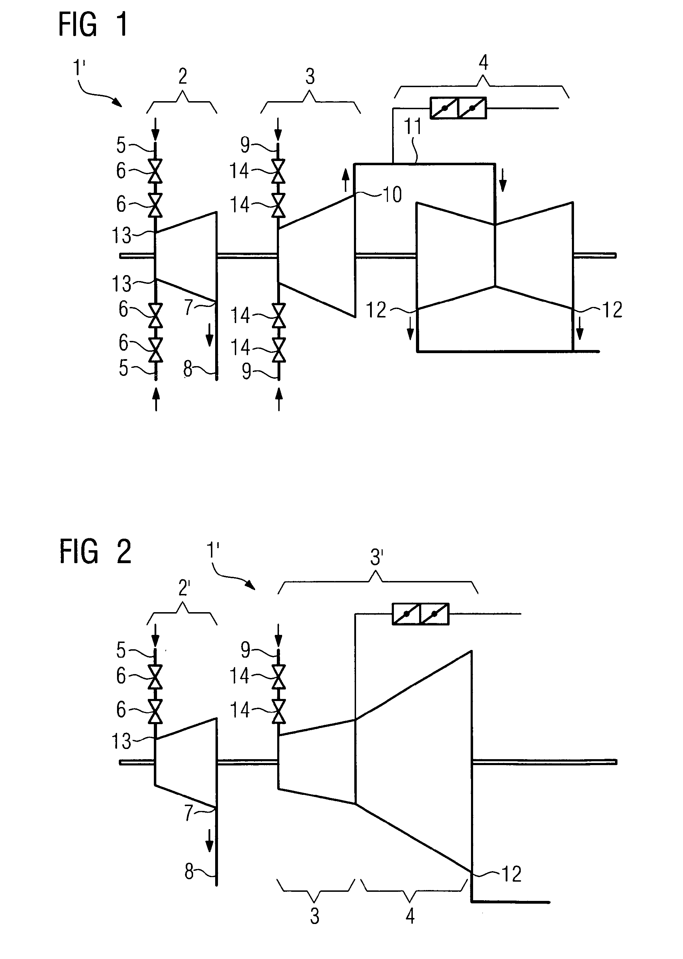

In FIG 1 ist eine schematische Darstellung einer Dampfturbine 1 umfassend eine Hochdruck-Teilturbine 2, eine Mitteldruck-Teilturbine 3 und eine zweiflutige Niederdruck-Teilturbine 4 dargestellt. Die Hochdruck-Teilturbine 2 umfasst zumindest zwei Frischdampfleitungen 5, wobei in einer Frischdampfleitung 5 Ventile 6 angeordnet sind. Die Ventile 6 sind zum Regeln des Durchflusses eines durch die Frischdampfleitung 5 strömenden Dampfes ausgebildet. Der Frischdampf wird in einem nicht näher dargestellten Dampferzeuger oder Kessel erzeugt. Der im Dampferzeuger erzeugte Dampf gelangt über die Frischdampfleitung 5 und die Ventile 6 in die Hochdruck-Teilturbine 2, wird dort entspannt und strömt anschließend am Ausgang 7 aus der Hochdruck-Teilturbine 2 heraus. Über eine Abdampfleitung 8 gelangt der entspannte Dampf zu einem nicht näher dargestellten Zwischenüberhitzer und wird dort auf eine höhere Temperatur erhitzt und anschließend über zumindest eine Mitteldruck-Eingangsleitung 9 in die Mitteldruck-Teilturbine 3 geströmt. In der Mitteldruck-Teilturbine 3 wird der Dampf auf eine niedrigere Temperatur und einen niedrigen Druck entspannt und strömt ausgangsseitig 10 aus der Mitteldruck-Teilturbine 3 heraus und über eine Leitung 11 in die Niederdruck-Teilturbine 4. In der Niederdruck-Teilturbine 4 wird der Dampf weiter entspannt. Die Temperatur des Dampfes nimmt dabei weiter ab. Über Ausgangsleitungen 12 strömt der Dampf schließlich aus der Dampfturbine heraus und wird zu einem nicht näher dargestellten Kondensator geführt. Die vorbeschriebene Dampfführung erfolgt während der bestimmungsgemäßen Betriebsphase der Dampfturbine 1. Nach einem Stillstand von mehr als 48 Stunden liegt die Dampfturbine 1 in einem abgekühlten Zustand vor. Die Wellen und andere dickwandige Bauteile in der Dampfturbine 1 müssen vor der Beaufschlagung bzw. Belastung mit heißem, frischem Dampf kontrolliert vorgewärmt werden, um unzulässige Spannungen in den Bauteilen zu verhindern. Das erste Öffnen der Ventile 6 ist abhängig von der Leitfähigkeit des Dampfes, der Überhitzung und den Absolutwerten wie z. B. Druck p und Temperatur T des Dampfes.

Das Verfahren zur Aufwärmung der Dampfturbine 1 erfolgt wie nachfolgend beschrieben. Die Dampfturbine 1 umfasst eine Hochdruck-Teilturbine 2 und eine Mitteldruck- 3 und/oder Niederdruck-Teilturbine 4. Zwischen der Hochdruck-Teilturbine 2 und der Mitteldruck-Teilturbine 3 wird zumindest ein HD-MD-Ventil 14 angeordnet. Die Hochdruck-Teilturbine 2, die Frischdampfleitung 5 und der Dampferzeuger werden gleichzeitig aufgewärmt. In einem ersten Schritt wird der Gegendruck an der Ausgangsseite 7 der Hochdruck-Teilturbine erhöht. Dies kann durch Schließen des zwischen der Hochdruck- und Mitteldruck-Teilturbine angeordneten Dampf-Ventils 14 erfolgen. In einem nächsten Schritt wird am Eingang 13 der Hochdruck-Teilturbine 2 ein Ventil 6 geöffnet, sobald die Leitfähigkeit des im Dampferzeuger erzeugten Dampfes einen Toleranzwert unterschreitet. Dieser Toleranzwert kann Werte zwischen 0,5 und 5 µSiemens/cm annehmen. Die Leitfähigkeit des im Dampferzeuger erzeugten Dampfes wird hierbei fortwährend gemessen und in einer Leitstation erfasst und weiter verwertet.

In einem nächsten Schritt wird die Umdrehungszahl des Rotors der Hochdruck-Teilturbine 2 auf einen Wert unter der Nenndrehzahl geregelt. Es hat sich gezeigt, dass Werte für die Umdrehungszahl des Rotors für die Vorwärmung der Hochdruck-Teilturbine am besten zwischen 100 bis 1000 U/min liegen sollten.

In einem nächsten Schritt wird der an der Ausgangsseite 7 herrschende Gegendruck abgesenkt, sobald die Leitfähigkeit des im Dampferzeuger erzeugten Dampfes einen Grenzwert von 0,2 bis 0,5 *µ*Siemens/cm unterschreitet. Und das Absenken des Gegendruckes kann durch Öffnen der Dampf-Ventile 14 erfolgen.

Die Nenndrehzahl liegt bei 3000 U/m bzw. 3600 U/m, je nach dem, mit welcher Netzfrequenz - 50 Hz oder 60 Hz - das Wechselstromnetz betrieben wird. Für Kernkraftwerks-Dampfturbinenanlagen kann die Nenndrehzahl bei 1500 U/m liegen. In jedem Fall ist es von Bedeutung, dass im Schritt d) die Umdrehungszahl des Rotors deutlich, d. h. um ein Vielfaches unter der Nenndrehzahl liegt.

In einem nächsten Schritt erfolgt das Aufwärmen der MD- und/oder ND-Teilturbine 4 mit dem vom Dampferzeuger erzeugten Dampf, dessen Leitfähigkeit unter dem Grenzwert liegt, durch Öffnen des zwischen der Hochdruck- und Mitteldruck-Teilturbine angeordneten Dampf-Ventils.

In der FIG 2 ist eine alternative Ausführungsform einer Dampfturbine dargestellt. Die Dampfturbine 1' umfasst eine Hochdruckteilturbine 2' und eine als eine kompakte Einheit aufgebaute Mitteldruck- und Niederdruck-Teilturbine 3'. Die Mitteldruck- und Niederdruck-Teilturbine wird auch als E-Teilturbine bezeichnet. Ein wesentlicher Unterschied zu der in FIG 1 dargestellten Ausführungsform der Dampfturbine ist, dass die in der FIG 2 dargestellte Dampfturbine 1' keine Überströmleitung 11 umfasst. Die Funktionsweise des Verfahrens, bezogen auf die in FIG 2 dargestellte Dampfturbine, ist hierbei nahezu identisch mit dem zu der in FIG 1 beschriebenen Dampfturbine. Ein Unterschied ist, dass die Dampfturbine 1 in FIG 1 zwei Teilturbinen umfasst, wovon die eine eine Mitteldruck-Teilturbine 3 und die andere eine Niederdruck-Teilturbine 4 ist. Wohingegen die in der in FIG 2 dargestellte Teilturbine 3' sowohl die Mitteldruck- als auch die Niederdruck-Teilturbine in einem einzigen Gehäuse umfasst.

## Patentansprüche

1. Verfahren zum Aufwärmen einer Dampfturbine (1),
wobei die Dampfturbine (1) eine Hochdruck-Teilturbine (2) und eine Mitteldruck- und/oder Niederdruck-Teilturbine (3,4) umfasst,
wobei die Hochdruck-Teilturbine (2) eingangsseitig über eine Frischdampfleitung (5) an einem Dampferzeuger strömungstechnisch angekoppelt wird,
wobei zwischen der Hochdruck-Teilturbine (2) und der Mitteldruck-Teilturbine (3) ein Dampf-Ventil (14) angeordnet wird,
wobei die Hochdruck-Teilturbine (2) die Frischdampfleitung (5) und der Dampferzeuger zeitgleich aufgewärmt werden,
**gekennzeichnet durch**
folgende Schritte:
a) Erhöhung eines ausgangsseitigen Gegendrucks der Hochdruck-Teilturbine (2),
b) Öffnen eines vor dem Eingang (13) der Hochdruck-Teilturbine (2) angeordneten Ventils (6), sobald die Leitfähigkeit des im Dampferzeuger erzeugten Dampfes einen Toleranzwert unterschreitet,
c) Schließen des zwischen der Hochdruck- (2) und Mitteldruck- Teilturbine (3) angeordneten Dampf-Ventils (14),
d) Regeln der Umdrehungszahl des Rotors der Hochdruck-Teilturbine (2) auf einen Wert unter der Nenndrehzahl,
e) Absenken des Gegendrucks, sobald die Leitfähigkeit des im Dampferzeuger erzeugten Dampfes einen Grenzwert unterschreitet,
f) Aufwärmen der Mitteldruck- und/oder Niederdruck-Teilturbine (4) mit dem vom Dampferzeuger erzeugten Dampfes, dessen Leitfähigkeit unter dem Grenzwert liegt, **durch** Öffnen des Dampf-Ventils (14).

2. Verfahren nach Anspruch 1,
bei dem im Schritt b) der Toleranzwert Werte zwischen 0,5 und 5 µSiemens/cm annimmt.

3. Verfahren nach Anspruch 1 oder 2,
bei dem im Schritt d) der Wert der Umdrehungszahl des Rotors um ein Vielfaches unter der Nenndrehzahl liegt.

4. Verfahren nach Anspruch 3,
bei dem der Wert der Umdrehungszahl des Rotors zwischen 100 bis 1000 Umdrehungen pro Minute liegt.

5. Verfahren nach einem der vorhergehenden Ansprüche,
bei dem im Schritt e) der Grenzwert Werte zwischen 0,2 und 0,5 µSiemens/cm annimmt.
